# EUROPEAN PATENT APPLICATION

(11) **EP 4 075 017 A1**
(43) Date of publication of application: **19.10.2022**
(21) Application number: 22167622.4
(22) Date of filing: 11.04.2022
(51) Int. Cl.: F16F 15/32

(54) **SELF-ADHESIVE BALANCING WEIGHT FOR DIFFERENT RIM GEOMETRIES**

(30) Priority: 13.04.2021 EP 21168061
(71) Applicant: WEGMANN automotive GmbH, 97209 Veitshöchheim (DE)
(72) Inventor: WAGENSCHEIN, Dietmar, 97209 Veitshöchheim (DE); HORNUNG, Thomas, 97209 Veitshöchheim (DE)
(74) Representative: Lohr, Jöstingmeier & Partner

(57) **Abstract**

A self-adhesive balancing weight for a rim of a vehicle wheel has a mass body and an elastic support attached thereto. The elastic support comprises a body section, a rim section opposing to the body section and an intermediate section inbetween the body section and the rim section. The intermediate section is narrower than the rim section. This allows the rim section to flex towards the body section and therefore to adapt to a broad variety of rims.

## Description

### Field of the invention

The invention relates to a self-adhesive balancing weight, which may be attached to the rim of a wheel of a vehicle for balancing the wheel.

### Description of the related art

The contact surface of self-adhesive balancing weights generally is formed so as to accurately fit to a surface of a wheel rim. These matching surfaces provide a good adhesion of a self-adhesive tape to the rim and to the balancing weight. As the rim profiles of different types of wheels, e.g. coming from different wheel manufacturers and different rim sizes differ in a wide range, a great number of different balancing weights has to be kept on stock. Particularly, the surface of aluminum wheel rims, to which the balancing weights have to be fixed, often are concave-convex shaped so that accurate adaptation of balancing weights is difficult.

WO 99/00609 discloses self-adhesive balancing weights the contact surfaces of which are exactly complementary to the shape of the contact-surface of the respective wheel rim so that they could not be used with wheel rims of different shape.

DE 39 13 493 C1 discloses a balancing weight for tubular shafts where the weight is held by a hard acrylic cover.

EP 2 541 095 A1 discloses a balancing weight having an adhesive, which may be heated by electromagnetic radiation.

FR 1.309.852 discloses a balancing weight with a curved attachment section.

There is a large number of different rim geometries in the market. Furthermore, there are significant mechanical tolerances in the rims which may be in an order of 1 mm.

WO 2017/140888 A1 discloses a self-adhesive balancing weight, which has a specific curvature at its contact surface, which fits to many of the rims available.

For reliably attaching balancing weights to a rim, there are two basic concepts. Self-adhesive balancing weights usually have an essentially planar back surface which is designed to hold or adhere to an at least essentially planar surface which is curved only around the rotational axis of the wheel. Accordingly, the self-adhesive balancing weights have to be bent only in one axis. The second type of balancing weights are clip-on balancing weights which are held to the rim by a spring clip. These balancing weights usually are held in an outer groove of the rim and therefore must at least roughly be adapted to the contour of the groove. Due to the large number of different grooves, at least a significant number of differently formed balancing weights is required.

### Summary of the invention

The problem to be solved by the invention is to provide self-adhesive balancing weights which fit to a large number of different rim shapes. The balancing weight should provide sufficient adhesion to remain over its lifetime under normal driving conditions at its position at a rim of a vehicle wheel.

Solutions of the problem are described in the independent claims. The dependent claims relate to further improvements of the invention.

In an embodiment, a balancing weight may have a body providing a balancing mass and an elastic support. The elastic support may have an adhesive or self-adhesive surface which may be configured to hold the support together with the body to a rim of a wheel. Such a self-adhesive surface may include a pressure sensitive tape. It may include an adhesive tape that will stick with application of pressure, without the need for a solvent (such as water) or heat or any other means of activation. The self-adhesive balancing weight may be configured to be attached to a rim of a vehicle wheel. The elastic support may be configured to be located between the self-adhesive balancing weight and a rim of a vehicle wheel.

The elastic support may have a cuboid shape with at least one slot between the body and a rim attachment side. There may be two slots at opposing sides.

The body may include a high density material, which may further include iron or zinc. The body may have a cuboid shape and it may have rounded edges and/or rounded corners. The body has an outer side and opposing thereto a support side oriented to the elastic support. The body may at its support side be bonded or glued to the elastic support, e.g. by an adhesive tape.

The body may include any material as known from the art. The material may include at least one of lead, zinc, steel, plastic material and/or a compound of these. The material may also include a polymer material which may be filled with a high density material e.g. a metal. Basically any solid or flexible material which provides a desired mass may be used. It is further preferred, if the balancing weights have at least one inlay of a ferromagnetic material, e.g. like iron or steel, which would allow handling by a magnetic picking head. The body may also have a paint or coating. This may provide an aesthetic surface and/or protection from environmental damages.

The elastic support may have a flat shape, e.g. a cuboid shape or a tape with rectangular cross section, with two essentially parallel sides. A first side is oriented to the body while a second side is oriented to a rim when mounted to the rim. The elastic support may interface between the essentially flat support surface of the body and the rim. The rim may be curved in one or two axes. The curve radius of either axis may be determined by the size, type and manufacturer of the rim. To obtain a maximum adhesion to the body and the rim, the elastic support may contact both with a maximum surface area to obtain maximum adhesion, e.g by glueing and/or an adhesive tape. To increase flexibilty of the elastic support, it may have at least one slot between and parallel to the first side and the second side. There may be two slots at opposing sides. The slots allow to move the second side closer to the first side at least at the outside of the elastic support and therefore allows adaption to a curved surface.

The elastic support may include at least three layers or sections. These may be formed by the slots, or e.g. by three different layers. These sections may include a body section oriented towards the body, a rim section configured for rim mounting and a narrower intermediate section between these sections. There may be an adhesive layer, e.g including a pressure sensitive tape at the rim section to hold or adhere the balancing weight to a rim. The elastic support may include such an adhesive layer located distant from the mass body. Further, there may be an adhesive layer, e.g. pressure sensitive tape at the body section to hold or adhere the balancing weight to the body.

The intermediate section which may have a width of less than 80% or 50% or 30% of the width of the rim section and/or the width of the body section. The rim section and the body section may have the same width.

The elastic support may include a polymer material. It may further include a foam of a polymer material which may include polypropylene or polyurethane or any other suitable material. It may also include an elastic material like a thermoplastic elastomer e.g. TPU (thermoplastic polyurethane).

The elastic support may be one piece of material. In an embodiment, it may include a plurality of layers, e.g. individual layers for each section, which may be bonded, glued or laminated together.

Basically, the elastic support is a means for adpting different shaped surfaces. In an embodiment, a planar surface like a balancing weight has, may be adapted to a concave surface, e.g at a wheel rim, a covex surface e.g. at a gear shaft or to any other multi-dimensional curved surface. The elastic support may also be used for other parts than balancing weights which need adaption to a curved surface. Adaption to a rim radius may not only be made by bending the rim section, but also by deformation of the intermediate section. This provides adaptation to a broader range of rims. When a balancing weight is applied to a rim, it may be pressed firmly to the rim to start adhesion of a pressure sensitive adhesive. Here, specifically the intermediate section may be compressed, such that the body section touches the rim section and increases pressure from the body over the elastic support to the rim.

There may be a liner to protect the adhesive tape at the rim section and may almost cover the rim side of the rim section. It may further extend to at least one side to allow better gripping for easier removal of the liner. Such aliner may be at all embodiments shown herein.

In an embodiment, there may be gaps or cutouts at at least one side and preferably at both (opposing) sides of the elastic support, which allow easier bending to adapt the elastic body in a second axis to a radius of a rim. The gaps or cuts may be between individual balancing weights and/or groups of balancing weights. They may have differing distances and/or widths. Gaps or cutouts may be in the rim section, but also in the body section and/or the intermediate section.

A further embodiment relates to a chain or a belt of balancing weights comprising a plurality of balancing weights as disclosed in this document. These are interconnected by the elastic support.

An embodiment includes a rim of a vehicle wheel with a balancing weight attached, wherein the elastic support is arranged between the balancing weight and the vehicle wheel.

All the embodiments disclosed herein may be combined in any sequence.

### Description of Drawings

In the following the invention will be described by way of example, without limitation of the general inventive concept, on examples of embodiment with reference to the drawings.
Figure 1 shows an embodiment of a balancing weight.
Figure 2 shows an embodiment of a balancing weight on another rim.
Figure 3 shows an embodiment mounted to a flat section of a rim.
Figure 4 shows an embodiment of a balancing weight.
Figure 5 shows details of an elastic support.
Figure 6 shows a further embodiment.
Figure 7 shows an embodiment mounted to a rim with small radius.
Figure 8 shows an embodiment mounted to a convex surface.
Figure 9 shows an offset intermediate section.
Figure 10 shows a convex shaped balancing weight.
Figure 11 shows a further embodiment of an elastic support.
Figure 12 shows a side view on a belt of balancing weights.
Figure 13 shows a side view on a polymer balancing weight.
Figure 14 shows a belt of balancing weights in a top view.
Figure 15 shows an elastic support for a belt of balancing weights.
Figure 16 shows a side view with gaps or cutouts.
Figure 17 shows a side view with partial gaps or cutouts.
Figure 18 shows a section of a rim of a wheel.

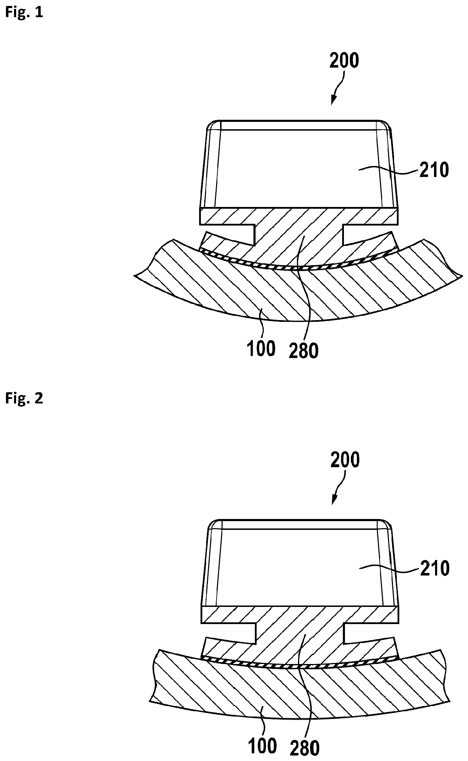

In Figure 1, an embodiment of a balancing weight 200 is shown. This balancing weight is a self-adhesive balancing weight which may be glued to a rim 100 of a vehicle wheel. The balancing weight 200 includes a mass body 210 which may further include a high density material, for example iron or zinc. The mass body provides a certain mass required for balancing a vehicle wheel. On a wheel, there may be applied multiple balancing weights or a defined length of a balancing weight-strip, to increase the mass for balancing the wheel, if required. The balancing weight further includes an elastic support 280 which is in-between the mass body 210 and the wheel rim 100. The surface of a rim has at least a first curvature with a radius given by the diameter of the rim. There may be a second curve at the outer side of the rim, e.g. for holding a tire. The elastic support 280 adapts to the curve of the rim 100 by flexing and therefore adapts to a large variety of different curves.

In Figure 2, the previous embodiment is shown on a rim 100 with a larger radius. It can be seen that the elastic support flexes less or is less bent or deformed to adapt to the radius of the rim.

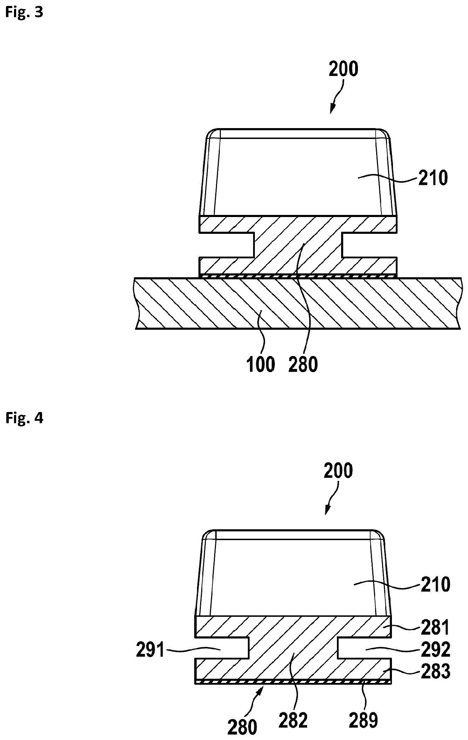

In Figure 3, the previous embodiment is shown mounted to a flat section of a rim. Here, the elastic support does not need to flex to fit to the flat surface of the rim.

In Figure 4, an embodiment of a balancing weight is shown. The elastic support 280 includes a body section 281 which may have the same width as the mass body 210. It may also be wider or narrower. Below the body section 281 is an intermediate section 282 which is followed by a rim section 283. The rim section 283 may be wider than the intermediate section 282. The intermediate section 282 may be narrower than the body section 281. Accordingly, two wider sections, the body section 281 and rim section 283 may be connected by an intermediate section 282 which may be narrower. The embodiment may also be described as an elastic support 280 having at least one slot which may include a first slot 291 and/or a second slot 292, on its sides. There may be an adhesive layer, e.g. pressure sensitive tape or an adhesive tape 289 at the rim section 283 to hold the balancing weight to a rim.

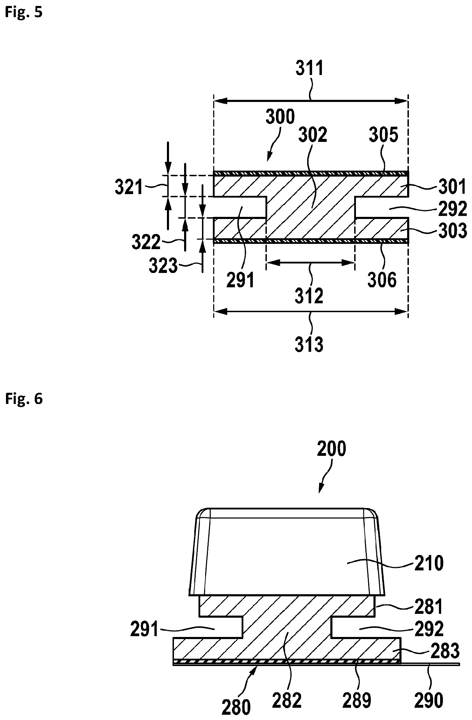

In Figure 5, further details of an elastic support 300 are shown. This support is similar to the elastic supports 280 shown herein or may be the same. The elastic support 300 may comprise one piece of material and includes a body section 301, an intermediate section 302, and a rim section 303. There may be an adhesive layer 306 at the rim section 303 to hold or adhere the balancing weight to a rim. Further, there may be an adhesive layer, e.g. pressure sensitive tape 305 at the body section 301 to hold or adhere the elastic support to a mass body which is not shown in here, but which may be the mass body 210 of the previous Figures. In this embodiment, the body section 301 and the rim section 303 have the same width 311, although they may have different widths. The intermediate section 302 is narrower and has a width 312. By the narrower intermediate section, at least one gap 291, 292 or slot is formed in the elastic support between the body section 301 and the rim section 303. As shown in this embodiment, the intermediate section 302 may be centered relative to the body section 301 and/or rim section 303. It may also have an offset and therefore appear sideward in this Figure. The offset may be such that the slot which is now on both sides of the intermediate section 302, may get smaller or even disappear at one side. The intermediate section may have a width 312 which is less than 80% of the width 311 of the body section 301 and/or the rim section 303. The width may also be less than 50% or less than 30% of the width 311. The width 312 of the intermediate section 302 may als be related to the width 313 of the rim section 303 with the same relations as above. The body section 301 may have a height or thickness 321. The intermediate section 302 may have a height of thickness 322, and the rim section 303 may have a height of thickness 323. In an embodiment, all three heights are the same. The heights may also be selected differently. For example, the height of the intermediate section 322 may be smaller than the heights of the body section and/or or the rim section. Alone the fact of a gap 291, 292 between the body section 301 and the rim section 303 allows a movability of these sections against each other, which provides a certain flexibility and adaptability. Such that even a very small height 323 of the intermediate section 302, which may bet between 0,1mm and 1mm or 0,2mm and 0,8 mm would increase flexibility, while a larger height would increase flexibility even more.

Figure 6 shows a further embodiment, where the body section 281 of the elastic support 280 may be narrower than the mass body 210. It may have a width of more than 50% and less than 90%, 80% or 70% of the mass body. The rim section 283 may be wider than the mass body 210. The width may be less than 150%, 140%, 130% 120% or 110% of the mass body. By this embodiment, the rim section 283 may even be bent stronger than shown in figure 1. Here the outer ends of the rim section 283 may pass closely at the the mass body without touching the narrower body section.

Further a liner 290 is shown. It protects the adhesive tape at the rim section and may almost cover the rim side of the rim section. It may further extend to at least one side to allow better gripping for easier removal of the liner. Such aliner may be at all embodiments shown herein.

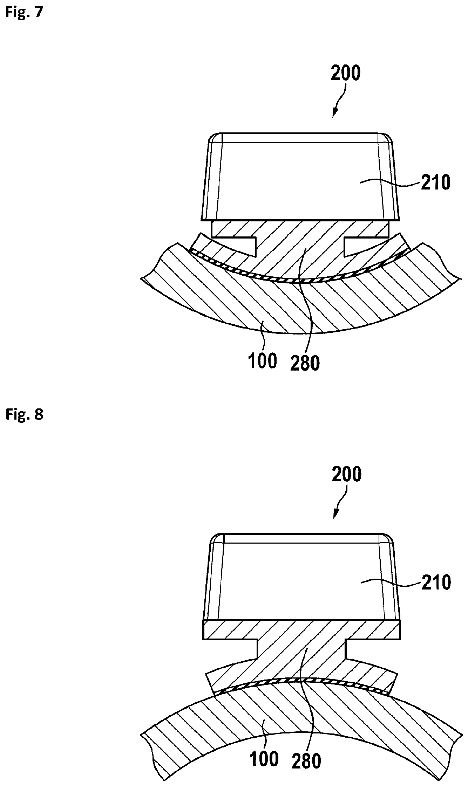

Figure 7 shows the previous embodiment mounted to a rim section, e.g. a rim horn, with comparatively small radius. Due to the smaller body section, the rim section can bend closer to the mass body and therefore adapt to a smaller radius. Adaption to a rim radius may not only be made by bending the rim section, but also by deformation of the intermediate section. This provides adaptation to a broader range of rims.

Figure 8 shows an embodiment mounted to a convex surface. Here, the rim section of the elastic support 280 has a concave shape to adapt to the convex surface of the rim 100. As the rim section of the elastic support 280 is elastic, it may basically adapt to any shape within its range of elasticity.

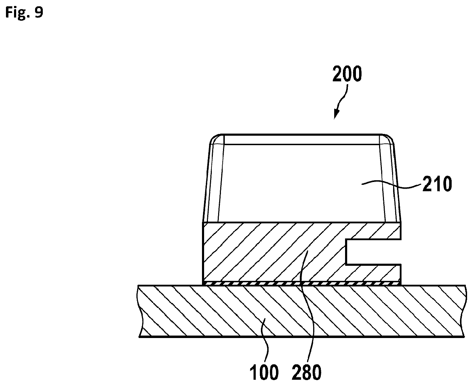

In Figure 9, an offset intermediate section is shown. Here, the gap or slot between the body section 301 and the rim section 303 is only on one side of the elastic support.

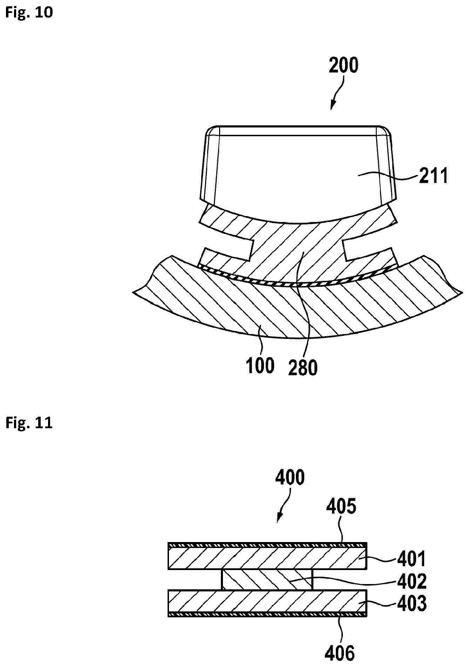

Figure 10 shows a curved balancing weight. The side of the body 211 which is attached to the elastic support 280 may be curved. It may have a convex shpe as shown or it may have a concave shape. The convex shape may be along a longitudinal axis of the elastic support 280. A convex shape may allow a better adaption to a concave shaped rim section resulting in a better adhesion.

In Figure 11, a further embodiment of an elastic support 400 is shown. The previous embodiments of the elastic supports may be made of one piece and therefore may be considered as monolithic. This embodiment includes multiple pieces of material which hold together and may be glued or welded or molded together. The elastic support 400 includes a body section 401, an intermediate section 402, and a rim section 403 which are separate pieces, e.g. sheets of material. Again, an adhesive layer, e.g. pressure sensitive tape 504 on the body section 401 and/or an adhesive layer, e.g. pressure sensitive tape 406 at the rim section 403 may be provided.

In a modified embodiment, either the body section 401 may be one piece with the intermediate section 402, whereas the rim section 403 is separate, or the rim section 403 may be one piece with the intermediate section 402, and the body section 401 is separate therefrom.

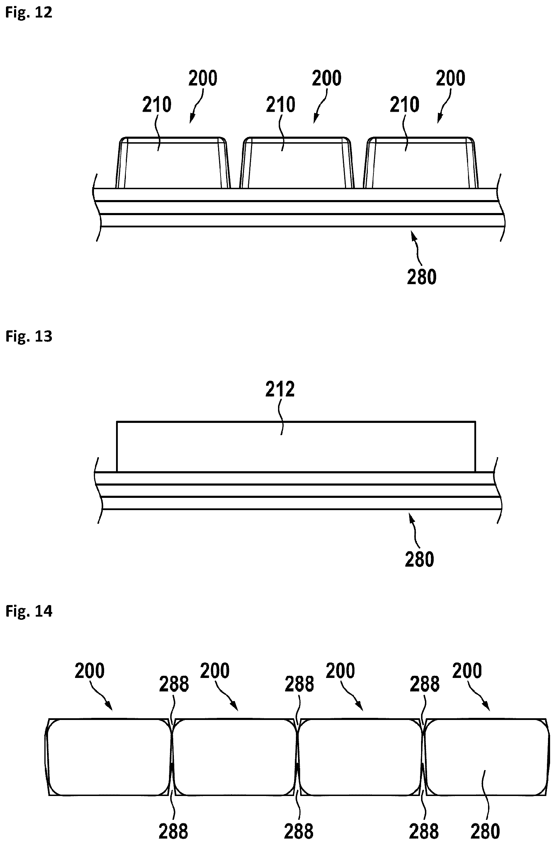

In Figure 12, a side view on a belt of balancing weights 200 having mass bodies 210 on a common elastic support 280 is shown. Here, a plurality of balancing weights 200 are on a common elastic support 280.

Figure 13 shows a side view of a polymer balancing weight. Instead of a mass body 210, a polymer mass body may be provided. A polymer mass body 212 may include a polymer material which may further include a high density filler and which may be cut to a length such to obtain a desired mass. The polymer mass body is fixed to an elastic support 280. There may may be multiple polymer mass bodies 212 on the same support 280. They may have different lenghts and/or weights.

In Figure 14, an embodiment simililar to the previous belt of balancing weights is shown in a top view. Here, in addition gaps or cutouts 288 between the individual balancing weights are shown. These increase the flexibility of the belt of balancing weights and may also serve as indications for performing cuts between the balancing weights to separate individual balancing weights or groups of balancing weights from the belt.

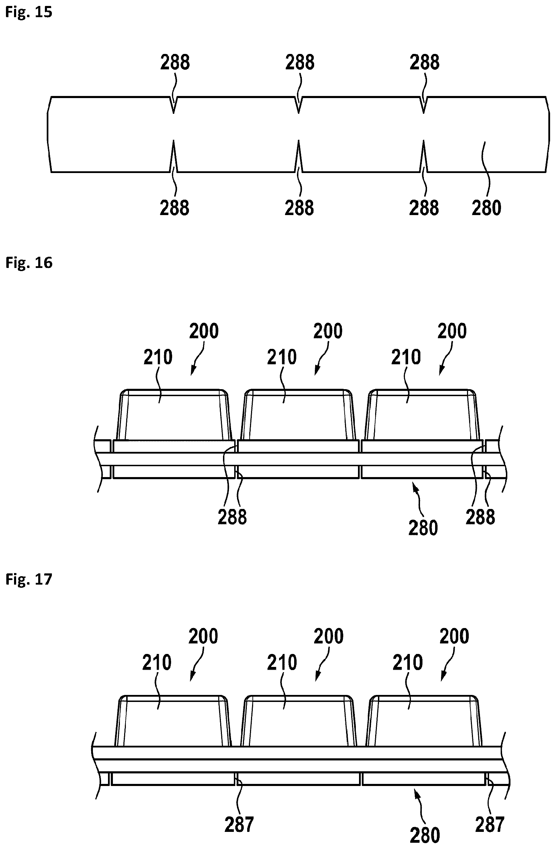

In Figure 15, an elastic support for a belt of balancing weights is shown. The elastic support 280 has an elongated shape and provides space for multiple balancing weights as shown in the previous Figure. Again, the gaps or cutouts 288 are shown.

In figure 16 a side view of an embodiment with gaps or cutouts 288 is shown. Here, the gaps or cutouts are in the body section and the rim section of the elastic support 280. In this embodiments the gaps or cutouts do not reach the intermediate section, but they malso be in this intermediate section as well.

In figure 17 an embodiment with partial gaps or cutouts 287 is shown. They are only in the rim section and not in the body section and the intermediate section. In another embodiment, the partial cutouts may also be in the intermediate section. In a further embodiment, the partial cutouts in the rim section may go from one side to the other side, such that the rim section is completely separated. It will still be kept in place by the intermediate section and/or body section.

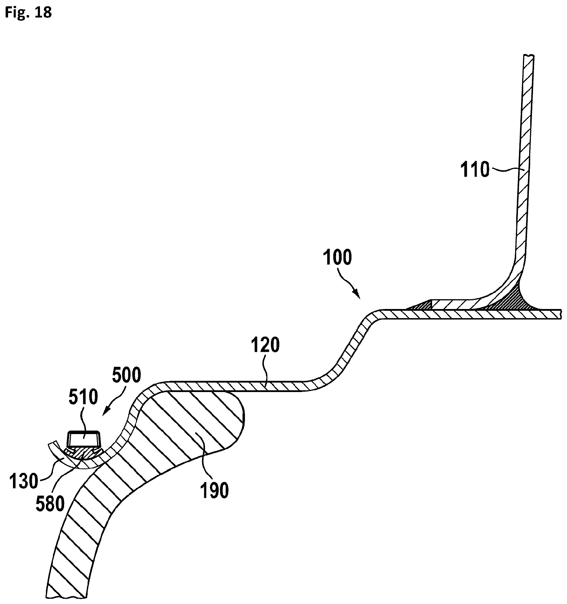

In Figure 18, a section of a rim of a wheel is shown. A wheel rim 100 includes a wheel disk 110 supporting a circumferential wheel band 120 which bears a tire 190. A wheel horn 130 at the end of the wheel band 120 prevents slipping of the tire from the wheel band. The outer rim of the wheel horn has a curved section which may hold a balancing weight 500, having a mass body 510 and an elastic support 580.

Although not shown herein, the elastic support may also be attached to clip-on balancing weights to improve the seating of the balancing weights at the rim and to avoid damage of the rim surface by the balancing weights.

### List of reference numerals

- 100: wheel rim
- 110: wheel disk
- 120: wheel band
- 130: wheel horn
- 190: tire
- 200: balancing weight
- 210: mass body
- 212: polymer mass body
- 280: elastic support
- 281: body section
- 282: intermediate section
- 283: rim section
- 287: partial gaps or cutouts
- 288: gaps or cutouts
- 289: adhesive layer, e.g. pressure sensitive tape
- 290: liner
- 291: first slot
- 292: second slot
- 300: elastic support
- 301: body section
- 302: intermediate section
- 303: rim section
- 305: adhesive layer, e.g. pressure sensitive tape
- 306: adhesive layer, e.g. pressure sensitive tape
- 311: width of body section, rim section
- 312: width of intermediate section
- 321: heigth of body section
- 322: heigth of intermediate section
- 323: heigth of rim section
- 400: elastic support
- 401: body section
- 402: intermediate section
- 403: rim section
- 405: adhesive layer, e.g. pressure sensitive tape
- 406: adhesive layer, e.g. pressure sensitive tape
- 500: balancing weight
- 510: mass body
- 580: elastic support

## Claims

1. Self-adhesive balancing weight (200) for a rim (100) of a vehicle wheel having a mass body (210) and an elastic support (280) attached to the mass body (210),
**characterized in, that**
the elastic support (280) comprises:
- a body section (281) in proximity to the mass body (210),
- a rim section (283) opposing to the body section (281) and
- at least one intermediate section (282) inbetween the body section (281) and the rim section (283), the intermediate section (282) having a width of less than 80% of the width of the rim section (283),
the elastic support (280) further comprises an adhesive layer (289) located distant from the mass body (210).

2. Self-adhesive balancing weight (200) according to claim 1,
**characterized in, that**
the adhesive layer (289) comprises a pressure sensitive tape.

3. Self-adhesive balancing weight (200) according to claim 1 or 2,
**characterized in, that**
the body section (281) is in contact with the mass body (210).

4. Self-adhesive balancing weight (200) according to any of the previous claims,
**characterized in, that**
the self-adhesive balancing weight (200) is configured to be attached to a rim (100) of a vehicle wheel.

5. Self-adhesive balancing weight (200) according to any of the previous claims,
**characterized in, that**
the elastic support is configured to be located between the self-adhesive balancing weight (200) and a rim (100) of a vehicle wheel.

6. Self-adhesive balancing weight (200) according to any of the previous claims,
**characterized in, that**
the body section (281) has a width larger than the width of the intermediate section (282).

7. Self-adhesive balancing weight (200) according to any of the previous claims,
**characterized in, that**
the body section (281) and the rim section (283) have the same width.

8. Self-adhesive balancing weight (200) according to any of the previous claims,
**characterized in, that**
the body section (281) has a width smaller than the mass body (210) and/or the rim section (283) has a width larger than the mass body (210).

9. Self-adhesive balancing weight (200) according to any of the previous claims,
**characterized in, that**
the rim section (283) comprises an adhesive layer (289) distant from the mass body (210).

10. Self-adhesive balancing weight (200) according to claim 7,
**characterized in, that**
a liner (290) is provided on the adhesive layer (289) of the rim section (283).

11. Self-adhesive balancing weight (200) according to claim 7,
**characterized in, that**
the adhesive layer (289) of the rim section (283) is configured to hold or adhere the balancing weight to a rim (100) of a vehicle wheel.

12. Self-adhesive balancing weight (200) according to any of the previous claims,
**characterized in, that**
the body section comprises an adhesive layer (405) close to the mass body (210) and may be configured to hold or adhere the balancing weight to the mass body (210).

13. Chain of balancing weights comprising a plurality of balancing weights (10, 20, 30) according to any one of the previous claims,
**characterized in, that**
the balancing weights are mounted to an elongated elastic support.

14. Chain of balancing weights according to the previous claim, **characterized in, that**
at least one of gaps or cutouts (18) are provided between balancing weights at one or both sides of the elastic support (280), wherein
the at least one of gaps or cutouts (18) may be provided in the rim section (283).

15. A rim (100) of a vehicle wheel comprising a balancing weight according to any of the claims 1 to 12 wherein the elastic support (280) is arranged between the balancing weight and the vehicle wheel and
the adhesive layer (289) is located between the rim section (283) and the rim (100).
